(19) Europäisches Patentamt
European Patent Office
Office européen des brevets

(11) EP 0 604 319 B1

(12) EUROPEAN PATENT SPECIFICATION

(45) Date of publication and mention of the grant of the patent:
**28.04.1999 Bulletin 1999/17**

(51) Int Cl.6: **C08G 73/10**, C09J 179/08, C09D 179/08

(21) Application number: **93403147.7**

(22) Date of filing: **23.12.1993**

# (54) Polyimide solution compositions and process for preparing same

Polyamid-Lösungszusammensetzungen und Verfahren zur Herstellung

Compositions de solutions de polyamide et procédé de préparation

(84) Designated Contracting States:
**AT BE CH DE FR GB IT LI NL**

(30) Priority: **25.12.1992 JP 358909/92**
**02.12.1993 JP 339549/93**

(43) Date of publication of application:
**29.06.1994 Bulletin 1994/26**

(73) Proprietor: **Itatani, Hiroshi**
**Sanbu-gun, Chiba-ken (JP)**

(72) Inventors:
- **Oie, Yoshihiro**
  **Suginami-ku, Tokyo (JP)**
- **Itatani, Hiroshi**
  **Sanbu-gun, Chiba-ken (JP)**

(74) Representative: **Gillard, Marie-Louise et al**
**Cabinet Beau de Loménie**
**158, rue de l'Université**
**75340 Paris Cédex 07 (FR)**

(56) References cited:
**EP-A- 0 046 074**
**DE-A- 3 925 099**
**FR-A- 2 295 978**

- **PATENT ABSTRACTS OF JAPAN vol. 15, no. 248 (C-843)(4776) 25 June 1991 & JP-A-03 077 865 (NEW JAPAN CHEM CO LTD)**
- **ANGEWANDTE MAKROMOLEKULARE CHEMIE vol. 66, 1978, BASEL CH pages 181 - 191 SUZUKI ET AL. 'Synthesis and properties of polyesterimides containing a bicyclo-octene ring'**

Remarks:
The file contains technical information submitted after the application was filed and not included in this specification

EP 0 604 319 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

BACKGROUND OF THE INVENTION

1. Field of the Invention

The present invention relates to solution compositions comprising a polyimide resin having excellent heat-resistant insulating properties, and a process for preparing the same. More particularly, the invention relates to an imidization process which is effected in an organic polar solvent in the presence of an acid with heating, and a high molecular weight polyimide solution composition prepared by this process and having a good storage stability.

The present invention also relates to solution compositions of polyimide block copolymers having excellent properties of polyimides of the two-component type and further having a new function imparted thereto, a process for preparing the composition and use thereof.

2. Prior Art

Polyimide resins have high resistance to heat and chemicals, are also outstanding in mechanical characteristics, electrical insulating properties and like characteristics, and are very useful especially for films, electric wire or cable coatings, adhesives, coating compositions, laminates, etc. for use at high temperatures.

Polyimide resins are used as heat-insulating films, adhesives, coating agents, molding resins or laminating resins, and have found in recent years applications to electric or electronic materials, space aeronautic materials, automotive parts and components of special devices or apparatus.

Polyimide resins have the advantages of being excellent in physical properties, being available in the form of resins of high purity as prepared from materials of high purity by condensation and having high solvent resistance. Presently, improvements achieved in the mechanical and electrical characteristics and other properties of polyimides have led to wider use of the resins. Further attempts are made to give higher dimensional stability and impact resistance, increased storage stability and improved properties for use as separation membranes and also to impart adhesive properties to the resins.

Efforts are also made to prepare polyimides having imido groups with a modified terminal end or multicomponent polyimides unlike two-component polyimides typical of which are Kapton and Upilex so as to develop polyimide resins which fulfill the characteristics requirements of the contemplated use.

Generally used as processes for preparing polyimides, especially aromatic polyimide resins are (a) a process comprising reacting equal amounts of tetracarboxylic acid dianhydride and aromatic diamine in a polar solvent, such as N-methyl-2-pyrrolidone (abbreviated as NMP) or dimethylformamide (DMF), in the absence of water at a low temperature to obtain high-molecular-weight polyamic acid, then casting or molding the polyamic acid and thereafter heat-treating the product to obtain a film or molding, and (b) a process wherein acetic anhydride and triethylamine are added to polyamic acid, and the mixture is chemically treated to separate out an imide compound. These processes utilize the nonmelting or insoluble properties of the polyimide resin. Since the imidization reaction of polyamic acid takes place during molding to release or evaporate water, it is difficult to determine the molding condition. Further the film formed is susceptible to breaking owing to shrinkage during the film forming step or to the low strength of polyamic acid.

In recent years, on the other hand, polyimides are developed which are formable or moldable without entailing a chemical reaction and which are soluble in organic solvents. Compositions of solvent-soluble polyimide are moldable in the form of polyimide, can therefore be molded merely by removing the solvent and are accordingly outstanding in moldability. The composition further has the advantage of giving a smooth-surfaced polyimide film free from pinholes which would otherwise be formed owing to dehydration.

The polyimide resin prepared from 3, 3',4, 4'-biphenyltetracarboxylic acid dianhydride (BPDA) and 4, 4'-diaminodiphenyl ether is soluble in 4-chlorophenol, so that when heated in 4-chlorophenol at about 180°C and thereby dehydrated, the resin makes a directly imidized polyimide solution having good storage stability and a high molecular weight. The solution forms a polyimide film having excellent properties when cast and heated to evaporate off the solvent (Examined Japanese Patent Publication SHO 61-45652).

However, 4-chlorophenol is highly toxic and gives off a noxious odor. Accordingly, also known are a process wherein m-cresol, xylenol or like phenolic solvent is used as a substitute for this solvent (Unexamined Japanese Patent Publication SHO 50-113597), and a process which employs a solvent mixture of phenol and other phenolic solvent (Unexamined Japanese Patent Publications HEI 3-199233 and HEI 2-199152).

Because phenolic solvents have a high boiling point and strong toxicity and cause erosion or like serious damage to the human body when coming into direct contact therewith, these solvents are prepared or processed in equipment having protective means for completely preventing release of the solvent. It is therefore required to use solvents ensuring high safety and substituting for these solvents.

Recently, it is often practiced to make a two-component polyimide into a multicomponent polyimide by adding other component for use as a modified resin which retains the original function of the two-component polyimide and which is made suitable for the desired use by compensating for the inferior properties. Known polymers composed of at least three components include random copolymers, alternating copolymers and block copolymers.

Random copolymers exhibit the properties of the individual components on the average rather than exhibiting the excellent properties of one of the components, so that modification to the block copolymer is more useful than modification to the random copolymer. For example, polyurethane resins are made into block copolymers for modification. Modification of polyamidoimide to a block copolymer is also proposed (Unexamined Japanese Patent Publication SHO 51-34300).

When a multicomponent polyimide is prepared by the conventional two-stage condensation process, a polyimide precursor (polyamic acid) has its amido groups readily exchanged in the solvent used to form a random copolymer as is already known. It is therefore attempted to mix a multiplicity of components together from the start and convert the acid to a modified polyimide, i.e., a multicomponent polyimide (Examined Japanese Patent Publications SHO 63-66852 and SHO 61-296031).

Another process is known in which an oligomer of sulfonamide is prepared and then reacted with an acid anhydride to obtain a polyimide resembling a block copolymer and improved in mechanical strength, resistance to aging and workability (Examined Japanese Patent Publication SHO 60-166326). A polyimide also resembling a block copolymer is prepared using an isocyanate (Examined Japanese Patent Publication HEI 1-21165).

To obtain modified polyimides, it is also known to prepare a block and segment block copolymer polyimide with use of a mixture of phenolic solvents such as a mixture of phenol and methoxyphenol or mixture of phenol and 2,4-dimethylphenol. The product is useful for producing separation membranes of improved properties (U.S. Pat. No. 5,202,411).

Active research has been conducted in recent years to develop solvent-soluble polyimides. It is known that fluorine-containing polyimides are readily soluble in various organic solvents. Also known are polyimides which are soluble in toluene (Unexamined Japanese Patent Publication HEI 1-263117) and polyimides which are soluble in acetone (Unexamined Japanese Patent Publication HEI 2-160832). The polyimides soluble in acetone are soluble in an amount of at least 10% also in DMF, NMP, methylene chloride, methyl ethyl ketone, ethylene glycol, dimethyl ether, etc.

Since suitable processes for effecting direct imidization in a solvent are unknown, these soluble polyimides are prepared by subjecting the starting material to polycondensation in NMP to obtain polyamic acid, then adding acetic anhydride and triethylamine to the acid and collecting the resulting product in the form of a polyimide powder which separates out. The powder is dissolved in NMP or other solvent again and made into films or moldings.

Polyimides are also known which are soluble in NMP, DMF and like organic polar solvents (Unexamined Japanese Patent Publications HEI 4-11631, HEI 4-20252 and HEI 4-23832). These polyimides are prepared also by reacting the starting materials in NMP to obtain polyamic acid and casting the acid into a film or molded product, or by adding acetic anhydride and triethylamine to a polyamic acid solution to separate out a polyimide powder, which is then collected.

A process is also known wherein direct imidization is effected in NMP or like polar solvent using, in place of an aromatic diamine, an isocyanate thereof (Examined Japanese Patent Publication SHO 64-10021). This process nevertheless has the disadvantage that the isocyanates usable are limited, expensive and low in storage stability.

FR-A-2 295 978 relates to a method of preparing polyimides which comprises subjecting a diamine and a tetracarboxylic acid dianhydride to a polycondensation reaction in a polar organic solvent, in the presence of a catalyst such as a carboxylic acid, at a temperature of 100-220°C.

JP-A-3 077 865 discloses a method of producing aromatic cyclic polyimides which comprises continuously or intermittently adding a specific aromatic polyamine to a reaction system comprising an $\alpha$, $\beta$-unsaturated dicarboxylic acid anhydride and a mixed solvent (60-99 wt% nonpolar solvent + 1-40 wt% aprotic polar solvent) in the presence of an acid catalyst under reflux and dehydration under heating.

It is also reported that an acid dianhydride and an aromatic diamine are heated at a high temperature in an organic polar solvent for direct imidization (Unexamined Japanese Patent Publications HEI 2-8221 and HEI 2-4832) . More specifically, the starting materials are mixed together in NMP, and the mixture is heated at a high temperature of 190 to 200°C for a long period of time to produce a polyimide. However, this process is not used generally because a side reaction takes place concurrently with the imidization reaction. The present inventors prepared a polyimide of high molecular weight from 4, 4'- [2, 2, 2-trifluoro-1-(trifluoromethyl) ethylidene] bis-(1, 2-benzenedicarboxylic dianhydride) (6FDA) and o-toluidinesulfone by heating these compounds in NMP at 190 to 200°C for a long period of time. The polyimide exhibited abnormal behavior. The molecular weight distribution determined by GPC revealed two peaks as distinguished from that of usual polyimides. In particular, the polyimide portion with an abnormally high molecular weight on the higher molecular weight side appeared to be an abnormal polymer formed by a reaction involving NMP.

These results indicate that a process has yet to be developed wherein a polyimide, soluble in organic polar solvents, is subjected to condensation in an organic polar solvent with heating for direct imidization to prepare a polyimide solution having a high molecular weight and good storage stability.

## SUMMARY OF THE INVENTION

The main object of the present invention is to develop a process for preparing a polyimide solution having a high molecular weight and good storage stability of a polyimide which is soluble in organic polar solvents by a single step, i.e., by subjecting the polyimide to condensation in an organic polar solvent with heating for direct imidization, to develop a process which comprises the same procedure as above and which is adapted to prepare a block polyimide copolymer solution or segment block polyimide copolymer solution having various other additional properties, and to develop solution compositions of such polyimide or copolymer solution and use thereof.

To fulfill the above object, the present inventors have conducted intensive research and consequently found that when an acid is added to an organic polar solvent for use in preparing a polyimide resin solution to ensure catalytic activity, dehydration takes place readily with heating to give a polyimide solution composition having a high molecular weight and good storage stability.

The research subsequently conducted has revealed that this process also affords a polyimide solution composition through functionally excellent multicomponent block copolymerization. These findings have matured to the present invention.

## DETAILED DESCRIPTION OF THE INVENTION

The imidization reaction of the present invention can be interpreted as represented by the following chemical equation. In the presence of a catalyst comprised of two components, one being an acid, an acid dianhydride in an organic polar solvent is converted to a highly active carbonium cation. The cation reacts with an aromatic diamine to form an unstable amic acid cation, which immediately undergoes dehydration condensation, giving a polyimide solution.

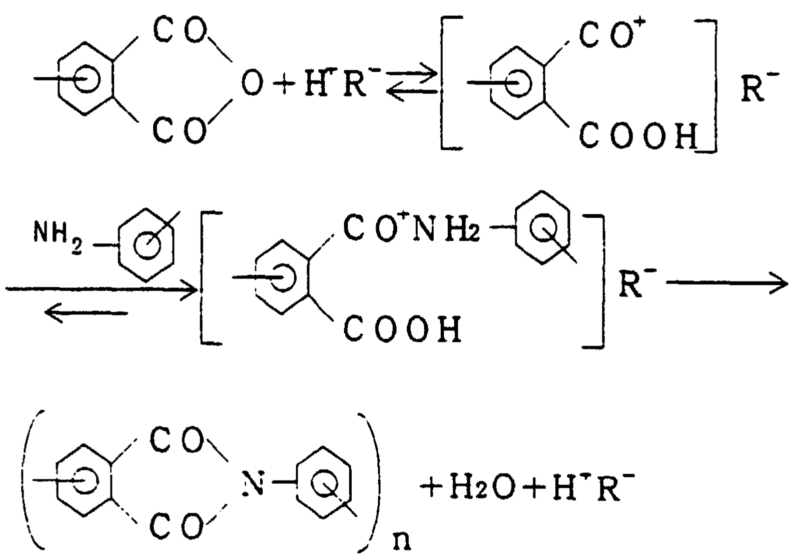

The acid serving as a component of the catalyst reacts with the acid dianhydride and is therefore preferably an acid close to benzoic acid in the degree of dissociation or having greater acidity. Accordingly, acetic acid or like fatty acid is not suitable, nor is oxalic acid suitable.

Sulfuric acid depolymerizes polyimides. Thus, free mineral acids have no catalytic activity. However, hydrochloric acid or like mineral acid acts catalytically when in the form of a salt with pyridine or quinoline for example.

Although catalytically active organic acids for use in the invention are not limited particularly, preferable are those having a double bond in the vicinity of acid because the presence of the double bond gives enhanced ionic properties to the acid and makes the ion dipole separated by a great distance to accelerate formation of the polyimide solution. Examples of useful acids are crotonic acid, acrylic acid, trans-3-hexenoic acid, hydroxybenzoic acid, benzoic acid, terephthalic acid, benzenesulfonic acid, p-toluenesulfonic acid, naphthalenesulfonic acid, etc. To produce polyimide solutions of high molecular weight, 4-position substituted benzenecarboxylic acid and sulfonic acid are especially preferable, and crotonic acid, cinnamic acid or long fatty acids are preferred. In the case where the polyimide solution

is cast for forming with heating, it is desirable to use crotonic acid $\gamma$ - valerolactone or benzoic acid which has a lower boiling point.

Examples of useful mineral acid salts are those prepared from an acid such as hydrochloric acid, phosphoric acid or nitric acid and a base such as pyridine, quinoline, triethylamine, N-methylmorpholine or trimethylenediamine. Pyridine hydrochloride, which is low in boiling point, is especially suited for use is molding the polyimide solution with direct heating.

The solvent for use in preparing the soluble polyimide is a polar solvent other than a phenolic solvent. Examples of such solvents are N-methyl-2-pyrrolidone, dimethylformamide, N, N-dimethylacetamide, tetramethylurea, dimethyl sulfoxide and sulfolane, dioxane or tetrahydrofuran. The phenolic solvents are excluded because they exhibit peculiar behavior in the imidization reaction.

Examples of other useful polar solvents are ketones such as acetone, 2-butanone, cyclohexanone and acetophenone; aromatic hydrocarbon halides such as chlorobenzene, dichlorobenzene and chlorotoluene; aliphatic and aromatic carboxylic acid esters such as acetic acid esters of methyl, ethyl, butyl and phenyl, methyl benzoate and dimethyl terephthalate; and ethers such as dibutyl ether, diphenyl ether, anisole, and ethylene glycol mono-and dimethyl and ethyl ethers.

The amount of polyimide to be dissolved can be determined by admixing therewith such organic polar solvents singly, or at least two of them in a suitable amount. Not only a single solvent but also a mixture of at least two suitable solvents is selected as a solvent for dissolving, for example, at least 10% of polyimide. Especially useful are NMP, DMF, dioxane and methyl ethyl ketone which are low in boiling point.

Although the acid dianhydride to be used in the present invention is not limited specifically, examples of useful acid dianhydrides are as follows.

Aromatic acid dianhydrides

Biphenyltetracarboxylic dianhydride
Benzophenonetetracarboxylic dianhydride
Bis (dicarboxyphenyl)propane dianhydride
4, 4'-[2, 2, 2-Trifluoro-1-(trifluoromethyl) ethylidene] - bis(1, 2-benzenedicarboxylic anhydride) (6FDA)
Bis (dicarboxyphenyl) sulfone dianhydride
Bis (dicarboxyphenyl) ether dianhydride
Thiophenetetracarboxylic dianhydride
Pyromellitic dianhydride
Naphthalenetetracarboxylic dianhydride

Aliphatic acid dianhydrides

1, 2, 3, 4-Butanetetracarboxylic dianhydride
Cyclopentanetetracarboxylic dianhydride
Bicyclo(2, 2, 2)-oct-7-ene-2, 3, 5, 6-tetracarboxylic dianhydride
5- (2, 5-Dioxotetrahydrofuryl)-3-methyl-3-cyclohexane-1, 2-dicarboxylic anhydride

These compounds can be used singly, or at least two of them are usable for preparing a polyimide solution.

Useful aromatic diamines are not limited specifically and include, for example, the following compounds.
1, 4-Benzenediamine
1, 3-Benzenediamine
6-Methyl-1, 3-benzenediamine
4, 4'-Diamino-3, 3'-dimethyl-1, 1'-biphenyl
4, 4'-Amino-3, 3'-dimethoxy-1, 1'-biphenyl
4, 4'-Methylenebis (benzeneamine)
4, 4'-Oxybis(benzeneamine)
3, 4'-Oxybis (benzeneamine)
3, 3'-Carboxyl (benzeneamine)
4, 4'-Thiobis(benzeneamine)
4, 4'-Sulfonyl (benzeneamine)
3, 3'-Sulfonyl (benzeneamine) 1-Methylethylidene-4,4, 4'-bis (benzeneamine)
1-Trifluoromethyl-2,2, 2-trifluoroethylidene-4, 4'-bis (benzeneamine)
4, 4'-Diaminobenzanilide
3, 5-Diaminobenzoic acid
2, 6-Diaminopyridine

4, 4-Diamino-3, 3', 5, 5'-tetramethylbiphenyl
2, 2-Bis (4-(4-aminophenoxy)phenyl)propane
Bis (4- (4-aminophenoxy) phenyl) sulfone
Bis (4-(4-aminophenoxy)phenyl)ethyl
1, 4-Bis(4-aminophenoxy)benzene
1, 3-Bis (3-aminophenoxy)benzene
4, 4'-Diaminobenzanilide
9, 9-Bis(4-aminophenyl) fluorene

These compounds can be used singly, or at least two of them are usable for preparing the polyimide solution.

In the process of the present invention, approximately equimolar amounts of acid dianhydride and aromatic diamine are reacted with heating in the above-mentioned polar solvent containing an organic acid or salt of mineral acid added thereto. The proportions of the starting materials (combined amount) and the polar solvent are determined based on the solubility of the materials, and a usually 5% to 60% of the materials and 95% to 40% of the solvent, preferably 10% to 40% of the materials and 90% to 60% of the solvent is used. Although the ratio of the acid or mineral acid salt to the dianhydride is not limited specifically, 2 to 50 wt.% of the acid or salt is used based on the dianhydride. The reaction temperature for imidization is 100 to 200t, preferably 140 to 180t. To avoid oxidation, it is desirable to effect the reaction in an inert gas (nitrogen, argon or helium for example).

The water resulting from imidization is removed from the reaction system in the form of an azeotropic mixture with xylene, toluene or tetralin during the reaction to enhance direct imidization.

The reaction can be completed effectively by adding to the reaction system a basic polycondensation promoter such as pyridine, triethylamine, N-methylmorpholine or quinoline.

The polyimide solution composition obtained by the process of the invention has a high degree of imidization and contains at a high concentration a polyimide having a high molecular weight and a high value in terms of logarithmic intrinsic viscosity. Over a temperature range of room temperature to 100°C, the polyimide remains almost free of crosslinking or depolymerization, so that the composition can be preserved for a long time within the above temperature range, especially for several months with good stability at a temperature of up to 50°C.

As will be apparent from examples to follow, the polyimide solutions obtained by a reaction in an acid-free polar solvent are up to 0.2 in logarithmic intrinsic viscosity, whereas those obtained in the presence of an acid are at least 0.4 in this viscosity value, and those highly viscous are as high as 1.25 in this value.

The polyimide solution composition of the invention comprises a high-molecular-weight polyimide formed of an acid dianhydride and aromatic diamine, an acid serving as a component of the catalyst and a volatile polar solvent, and is not only suitable for forming a film by casting and subsequent dehydration with heating but also usable for impregnating glass cloth, carbon fiber and other fabric to prepare composite materials and usable as an electric wire coating varnish, coating composition, adhesive or the like.

The present invention further includes the following modes.

(a) Process for preparing block polyimide solution by reacting components as successively added

Based on the fact that a high-molecular-weight polyimide solution is obtained directly in a polar solvent in the presence of a catalyst comprised of two components, one being an acid, the present inventors have found that the polycondensation of acid dianhydride and/or aromatic diamine as added to the reaction system successively affords a polyimide in the form of a block copolymer solution.

Stated more specifically, a polyimide solution is prepared by a two-step reaction, i.e., by heating an acid dianhydride and an aromatic diamine in a polar solvent in the presence of a catalyst comprised of two components, one being an acid to produce an imide oligomer first, and subsequently adding the acid dianhydride and/or aromatic diamine. With this process wherein formation of amic acid as an intermediate is not involved, random copolymerization can be prevented, and can undergo exchange of acid amide groups among molecules easily and promptly. In connection with the present process, it should be noted that aromatic acids are stronger than aliphatic acids, and that aromatic amines are weaker base than aliphatic amines. Accordingly, in the case where an aromatic dianhydride reacts with an aromatic diamine to form an imide oligomer, the condensation reaction proceeds more rapidly in the presence of an excess of the acid dianhydride than when the diamine is excessive to result in a narrower molecular weight distribution.

When an imide oligomer is formed with an excess of the aromatic diamine present, followed by addition of the aromatic dianhydride, a block polyimide solution is produced, whereas when an imide oligomer is formed with an excess of the aromatic dianhydride present, followed by addition of the aromatic diamine, a segment block polyimide solution is produced.

The block copolymer or segment block copolymer solution is obtained by varying the amount of components added and changing the order of addition and the properties of the polyimide can be improved using a method suited to the need. According to the present invention, synergistic effects are expectable by using components in different

combinations.

In each of the steps of the above method, the heating temperature is at least 120° C.

The process of the present invention makes it possible to produce a wide variety of polyimide solutions ranging from a soft elastomer to a rigid structural polyimide.

For example, polyimides are available which have an improved modulus of elasticity, higher dimensional stability, adhesiveness, improved transparency, enhanced mechanical strength and other characteristics imparted thereto.

The block polyimide solution composition obtained by the present invention contains no amic acid, is therefore stable against heat or moisture and can be stored for a prolonged period of time. The composition is used in various forms known in the art. For example, it is usable in the form of heat-resistant films and as an adhesive, coating composition and lamination resin. It is applicable to electrical or electronic materials, space aeronautic materials, automotive parts and components of special devices or apparatus.

(b) Solution composition of siloxane-containing segment block copolymer

Although polyimides are heat-resistant resins which are outstanding in resistance to chemicals and electric insulating properties, they have certain disadvantages in respect of adhesion as coating materials for ceramic, glass and silicon wafer substrates, consequently failing to fully exhibit the excellent heat resistance.

To improve the adhesion, methods have been developed which include a method of applying a coupling agent to the substrate to form a coupling layer thereon (Examined Japanese Patent Application HEI 2-11616), and a method of incorporating various coupling agents into a polyamic acid intermediate or using a polyamic acid intermediate having a terminal silicon group (Examined Japanese Patent Publication HEI 2-14365 and Unexamined Japanese Patent Publication HEI 2-92930).

Further attempts have been made in recent years to give improved adhesion by siloxaneimide copolymers. For example, it has been proposed to use aminomethylpolysiloxane (Unexamined Japanese Patent Publication HEI 2-88677) or bis-m-aminophenyl-tetramethyldisiloxane (same HEI 2-20523) to form a siloxane-containing polyamic acid and impart adhesion, or to form a polyimide resin of improved adhesion (same HEI 4-41529).

According to the present invention, silicone oil having a diamine ending is used for preparing an imide oligomer, which is then subjected to block copolymerization to prepare a solution composition of a siloxane-containing segment block polyimide. This composition exhibits strong adhesion to noncrystalline substances.

Conventional siloxane-containing polyamic intermediates are low in storage stability, are each a random copolymer and are limited in the characteristics available. If the polyamic acid intermediate is chemically treated to obtain a polyimide, which is then collected for use as dissolved in a solvent, the process becomes costly.

While many diaminosiloxane compounds are known, examples of such compounds suitable for use in the present invention are the following compounds.

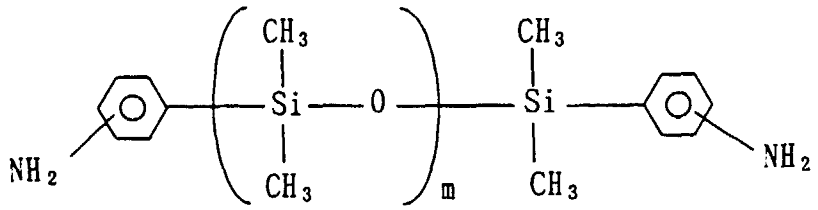

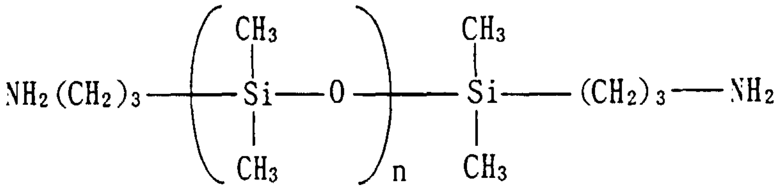

The latter formula will hereinafter be referred to briefly as "$NH_2$-(Si)-$NH_2$."

In practicing the present invention, an aromatic acid dianhydride is added to a diaminosiloxane in an amount of at least two moles per mole of the siloxane in an organic polar solvent in the presence of a catalyst comprised of

two components, one being an acid, followed by heating at temperature of at least 140°Cto form a siloxane-containing compound having acid anhydride endings. An aromatic diamine is then added to the compound, and the mixture is heated to obtain a polyimide solution composition.

Examples of preferred aromatic acid dianhydrides are those which are strong acid, such as 3, 4, 3', 4'-biphenyltetracarboxylic dianhydride (abbreviated as "s-BPDA"), pyromellitic dianhydride (PMDA) and 4, 4'- [2, 2, 2-trifluoro-1-(trifluoromethyl)ethylidene] bis-(1, 2-benzenedicarboxylic anhydride) (6-FDA).

The reaction wherein PMDA is used is represented by the following chemical equation.

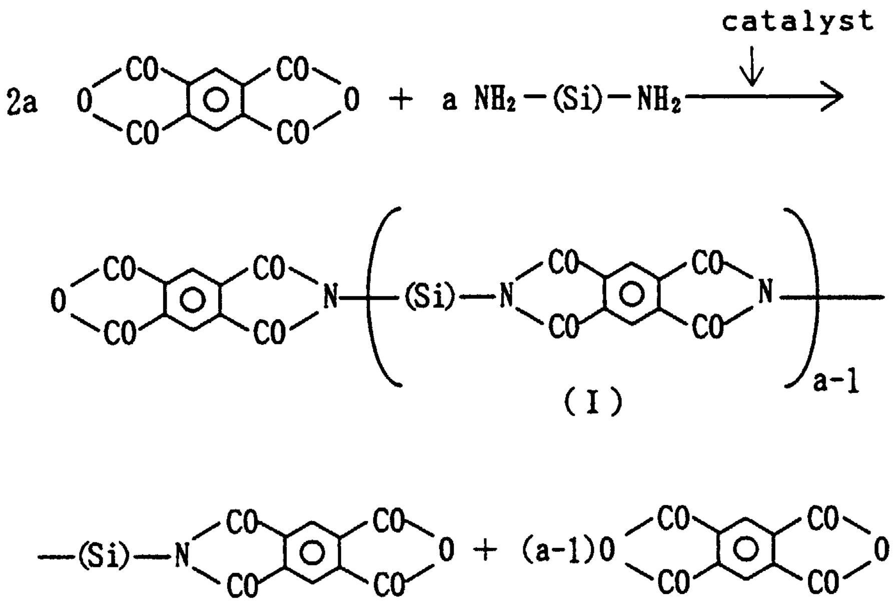


(I)

Stated precisely, the imidosiloxane precursor (I ) is not a single compound but an imide oligomer. The larger the amount of acid dianhydride used as compared with the siloxane, the smaller is the range of molecular weight distribution of the imide oligomer.

The aromatic diamine ($NH_2$-R-$NH_2$) is added to the precursor for the reaction of the second stage. This reaction is represented by the following chemical equation.

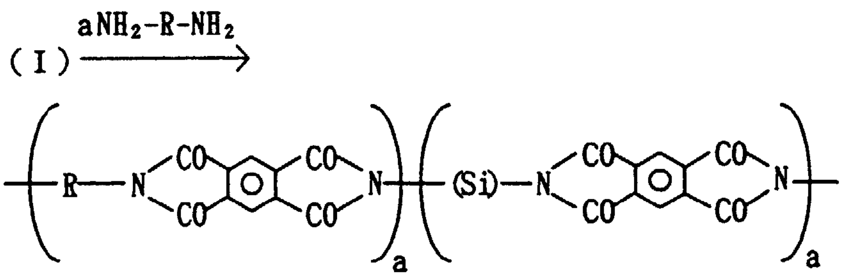


(I)

(II)

The reaction directly produces the segment block copolymer (II) in the presence of the catalyst. The polyimide solution composition thus obtained exhibits higher adhesion than the conventional siloxane-containing polyamic acid.

With the present invention, a mixture of the aromatic diamine and acid dianhydride can be added in place of the aromatic diamine. The mixing ratio of the two components is such that the acid dianhydride and the diamine are present in equimolar amounts in the overall system.

The segment block polyimide solution composition can be used as it is as a coating material for protecting the surface of various electronic devices. The composition is usable also for wiring structures for electronic circuits including, for example, semiconductors, transistors, ICs, light-emitting diodes and LSIs, and as an electrically conductive paste when having a conductive filler incorporated therein.

The composition is further useful as a coating varnish for dip-coating electric wires, magnet wires and electric

parts and for forming protective coatings on metal parts, and as an impregnating varnish for glass cloth, silica cloth, graphite fiber, carbon fiber and boron fiber. It is useful for structural components of laser domes, printed boards, radioactive waste containers, turbine blades, spaceships of which high-temperature characteristics and excellent electrical characteristics are required, and for internal finishing materials for computer wave guides, atomic devices or apparatus and X-ray devices to block microwaves or radiation. The composition is usable exactly in the same manner as usual coating composition of such type.

The composition is useful also as a molding material with for example graphite powder, graphite fiber, molybdenum disulfide, polyethylene tetrafluoride or Ekonol® incorporated therein to provide self-lubricating slidable surfaces, and is used also for piston rings, valve seats, bearings, seals, etc. The composition, when containing for example glass fiber, graphite fiber, carbon fiber or Kevlar® added thereto, is useful for jet engine parts and structural molding of high strength.

(c) Solution composition of BCD and siloxane-containing segment block copolymer

BCD stands for bicyclo [2, 2, 2] oct-7-ene 2, 3, 5, 6-tetracarboxylic dianhydride.

The segment block copolymer solution composition of siloxane-containing polyimide exhibits adhesion to ceramic, glass and silicon substrates. The solution composition of this polyimide exhibits enhanced adhesion when incorporating BCD. The solution composition shows adhesion also to amorphous alloys, copper, aluminum, in addition to noncrystalline substances such as glass.

The BCD-containing polyimide solution is devoid of yellow color which is characteristic of polyimides and almost colorless, and has increased solubility in solvents.

The reaction is represented by the following equation.

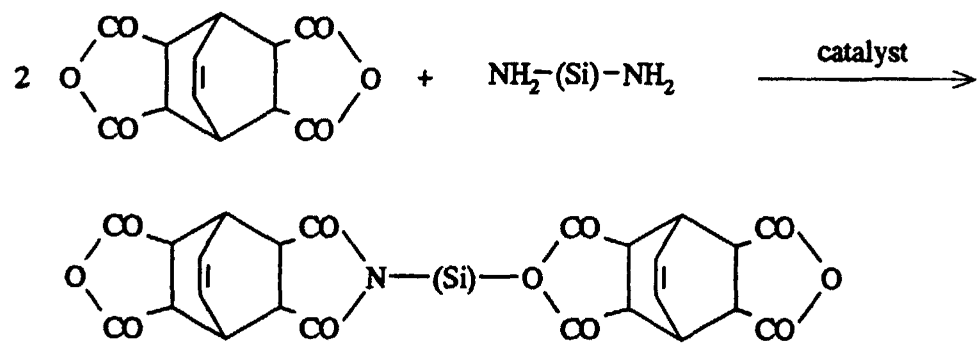


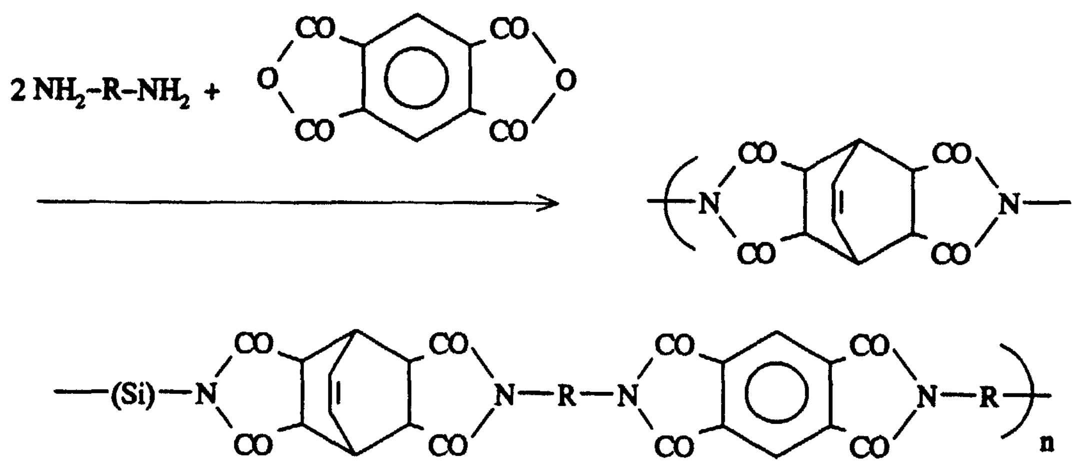

(d) Polyimide varnish for spray coating

The siloxane-containing polyimide solution composition is excellent in adhesion to metals, ceramics, glass, etc. and is therefore used as a heat-resistant coating composition.

Compositions of polyimide as dissolved in NMP or like polar solvent having a high boiling point are used as varnishes for dipping. However, in the case where the workpiece is dipped in the varnish and heated to evaporate off the solvent, the varnish will sag if applied to a large thickness (30-60 μm), so that the varnish is not usable for spraying.
When the spray coating method is used instead of the impregnation method, workpieces of small sizes can be coated efficiently uniformly.
To prevent sagging, the varnish of high concentration needs to be diluted with a diluent of low boiling point to a lower viscosity. Generally, high-molecular-weight polyimide solution compositions are highly viscous and difficult to use for spraying. The viscosity of the polyimide varnish can be reduced by lowering the molecular weight of the polyimide or increasing the content of siloxane or BCD.
According to the present invention, the above requirement is fulfilled in the following manner.
The imidization polycondensation reaction with use of a catalyst comprised of two components, one being an acid, proceeds much more rapidly at a high concentration than at a low concentration, and the method of controlling the molecular weight by interrupting the polymerization reaction encounters extreme difficulty in polyimide solutions of high concentration and is uncertain in reproducibility. To lower the degree of polymerization for the control of molecular weight, therefore, the present invention employs a method of bringing the polyimide forming reaction to an equilibrium by blocking the polyimide ending with a reaction terminator group.
The method wherein the acid dianhydride or aromatic diamine is used in a stoichiometrically excessive amount to interrupt polymerization has the drawbacks that the resulting polyimide is wide in molecular weight distribution and that the reaction system requires a long period of time to reach an equilibrium concentration. Accordingly, it is effective to control the molecular weight of the polyimide to be produced by adding as a shortstop a calculated amount of an acid anhydride such as phthalic anhydride, bicyclo [2, 2, 1] hept-5-ene-2, 3-dicarboxylic anhydride or maleic anhydride.
For example, it is suitable for a polyimide solution with a concentration of 35% to have a relatively lower molecular weight as large as of 10,000 to 50,000, preferably 10,000 to 30,000, based on the starting polystyrene molecular weight for use as a composition for spray coating.
To render a high-concentration polyimide solution usable as a low-viscosity varnish by spraying free of sagging, there arises a need to select a suitable solvent. Examples of good solvents having high dissolving properties for use in solutions of polyimide as dissolved for example in NMP are dioxane, γ-butyrolactone, or dimethyl ethylene glycol, for example. Toluene, xylene and tetralin are usable as bad solvents for gelation. The viscosity of the polyimide solution is adjusted to 60 cp (about 30 sec. in Ford cup viscosity) for spraying by adding a mixture of such good solvent and bad solvent to the solution. The solution then becomes applicable to ceramics, glass and metals by spray coating.

(e) Method of cleaning off adhering polyimide

The polyimide solution composition of the invention can be produced by a batchwise or continuous process. The reactor used for production is cleaned when there arises a need to terminate the reaction, collect the product or change the composition of reaction system.
When the reactor is to be washed with for example NMP or DMP, complete removal of the polyimide from the reactor wall requires a large amount of solvent and much labor.
The present invention proposes an economical cleaning method of washing polyimide solution compositions off the reactor wall on decomposition. These compositions are readily decomposed with primary and secondary aliphatic amines. Polyimides easily decompose especially when heated in a solution of ethanolamine, and become soluble in solvents. For example, a solution of ethanol in DMF is added to the polyimide, followed by heating at 60 to 100°C to decompose the polyimide. When the reactor is treated in this way, the reactor wall can be washed clean with water or methanol. Examples of useful primary and secondary amines are for example ammonia, methylamine, dimethylamine, morpholine or ethanolamine.

BRIEF DESCRIPTION OF THE DRAWINGS

Fig. 1 is a graph showing an IR absorption spectrum of an example of polyimide of the invention;
Fig. 2 is a graph showing the glass transition temperature of the polyimide; and
Fig. 3 is a graph showing the thermal decomposition temperature of the polyimide.

EXAMPLES

The features of the present invention will be described in more detail with reference to the following examples and comparative examples. The inherent viscosity was determined by using the following measuring method and

calculating from the equation given below.

$$\eta\ inh = \frac{ln(t/t0)}{0.5}$$

wherein t is the falling velocity of the polymer sample (0.5*g* of the sample as dissolved in 100*mℓ* of NMP), and t0 is the falling velocity of the solvent only. The polyimide solution composition obtained by reaction was placed into an excess of methanol, and the mixture was vigorously agitated to cause polyimide particles to separate out. The particulate polyimide was collected by aspiration and filtration and then dried in a vacuum at 150°C for 2 hours. A 0.5*g* quantity of the resulting polyimide powder was dissolved in 100*mℓ* of NMP, and the falling velocity of the solution was measured in a constant-temperature bath at 30°C ± 1°C using an Ostwald viscometer.

According to the present invention, the acid dianhydride and the aromatic diamine quantitatively form a polyimide, of course when used in precisely equimolar amounts and even when the mixing ratio is slightly altered. When the polyimide solution resulting from the reaction is added to a bad solvent, for example, to methanol or hexane, the polyimide separates out in the form of particles or a solid product, which can be collected quantitatively. The polyimide solution composition is characterized by its viscosity, color, specific gravity, concentration, solids content, etc. The solution composition can be used in the form of films, coating, adhesives, moldings and the like, for example, by casting the composition as it is or dipping workpieces therein, and evaporating off the solvent present.

When the polyimide solution composition is added to an excess of methanol to separate out a solid or is cast into a film, the solid or film is usable for determining various properties thereof. The IR absorption spectrum of the polyimide was determined on a KBr disc by infrared spectrometer "Nicolet 510 Ft." The absorption characteristic of the polyimide produced was found near 1780, 1720, 1370 and 720$cm^{-1}$. The spectrum revealed disappearance of absorption at 1650$cm^{-1}$ which is characteristic of the amide linkage of polyamic acid, polyimide precursor, and showed new absorption at 1780$cm^{-1}$. Calculation based on the absorption substantiated nearly 100% imidization.

The thermal decomposition temperature and glass transition temperature (Tg) were measured by "TAG-50" and "ASC-50" manufactured by Shimadzu Seisakusho, Ltd. The glass transition temperature (Tg), in particular, was determined by heating the sample to 420°C at a rate of 10°C/min, then cooling the sample in the air and heating the sample again to 350°C at a rate of 10°C/min. The Tg value shown was obtained by the second heating step.

Example 1

Preparation of soluble polyimide composition

For a reaction in a nitrogen stream, a 500-*mℓ* three -necked separable flask was used which was equipped with a stainless steel anchor agitator, nitrogen introduction tube and reflux condenser, the condenser comprising a trap having a stopcock, and a cooling tube having balls and mounted on the trap.

Into the three-necked flask were placed 7.35*g* (25 mmoles) of 3, 4, 3', 4'-biphenyltetracarboxylic dianhydride ($C_{12}H_6O_6$, product of Ube Industries, Ltd., hereinafter referred to as "BPDA"), 6,21*g* (25 mmoles) of bicyclo(2, 2, 2) oct-7-ene-2, 3, 5, 6-tetracarboxylic dianhydride ($C_{12}H_8O_6$, product of Aldrich Chemical Co., hereinafter referred to as "BCD"), 14.62*g* (50 mmoles) of 1, 3-bis (3-aminophenoxy)benzene($C_{18}H_{16}N_2O_2$, product of Mitsui Toatsu Chemicals, Inc., hereinafter referred to as "APB") and 4*g* (50 mmoles) of pyridine. To these materials were added 50*g* of NMP (product of Tokyo Kasei Co., Ltd.), 25*g* of benzoic acid (product of Tokyo Kasei Co., Ltd.), 50*g* of methyl benzoate (product of Tokyo Kasei Co., Ltd) and 15*mℓ* of toluene. While introducing nitrogen into the flask as held in a silicon bath, the mixture was maintained at room temperature for 30 minutes, then heated at 140°C for 1 hour and further heated at an elevated temperature of 180°C with stirring (350r.p.m.) for 3 hours. The reaction temperature was the temperature of the silicon bath.

The water formed during the reaction collected in the trap as an azeotropic mixture with toluene. When reacted at 180°C for 1 hour, the mixture ceased to produce water, whereupon the toluene and water were removed. Thus, a consistent polyimide solution was obtained. This solution composition, comprising a polyimide composed of BPDA, BCD and APB, benzoic acid, methyl benzoate and NMP, remained unchanged even when allowed to stand at room temperature for 1 month. For casting, the solution was applied onto a glass plate and heated at 85°C for 1 hour and then at 150°C in a vacuum for 2 hours, giving a transparent polyimide film. When the reaction mixture was poured into 1 liter of methanol, followed by stirring with a high-speed agitator having a cutter, a white powder separated out. The powder was collected by aspiration and filtration, thoroughly washed with methanol, dried with air and thereafter dried in a vacuum at 150°C for 2 hours, giving 27.2*g* of white polyimide powder.

The polyimide as dissolved in NMP was 0.85 in inherent viscosity at 30°C. IR spectroscopy gave the result

shown in Fig. 1, which reveals absorption characteristic of imide at 1777, 1716, 1374 and 711$cm^{-1}$ and absorption characteristic of APB at 1479 and 776$cm^{-1}$.

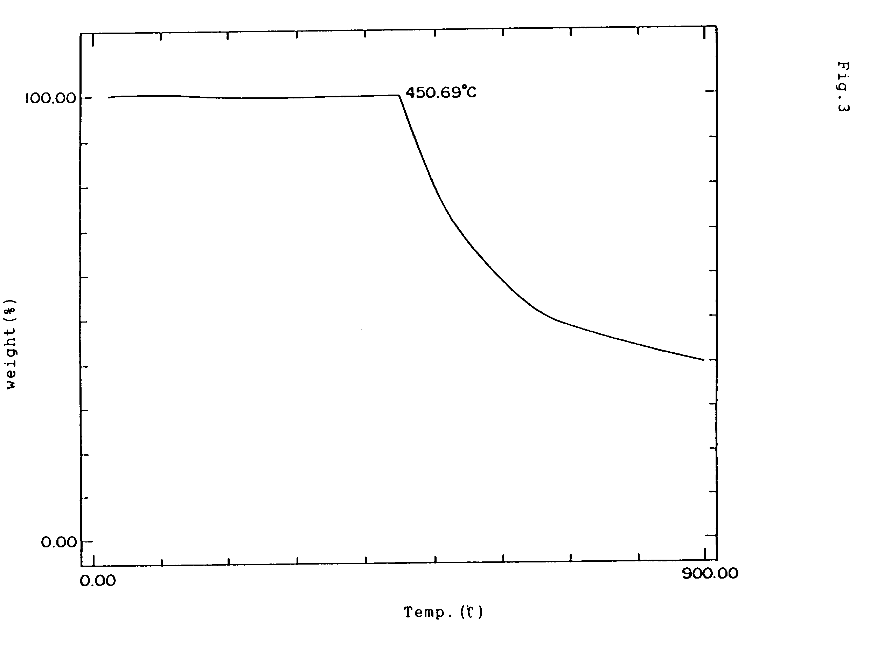

Fig. 2 shows the glass transition temperature as determined by a Shimadzu DSC measuring device. The glass transition point is found at 211 - 220°C. The thermal decomposition temperature as determined by a Shimadzu TG measuring device was 451°C as shown in Fig. 3.

Comparative Example 1

A reaction was effected in the same device as used in Example 1. A 7.35*g* quantity (25 mmoles) of BPDA, 6.21*g* (25 mmoles) of BCD, 14.62*g* (50 mmoles) of APB, 8*g* (100 mmoles) of pyridine, 15*mℓ* of toluene and 150*g* of NMP were placed into the flask and reacted in nitrogen. The reaction was carried out at room temperature for 30 minutes, at 140°C for 1 hour and 180°C for 3 hours. The reaction mixture was a liquid having a low viscosity. The reaction mixture was poured into 1 liter of methanol, and the mixture was treated in the same manner as in Example 1, giving 26.8*g* of polyimide powder. In NMP at 30°C, the product was 0.21 in inherent viscosity.

Example 2

A reaction was effected in the same manner as in Example 1. BPDA (7.35*g*), 6.21*g* of BCD, 14.62*g* of APB, 4*g* of pyridine and 15*mℓ* of toluene were placed into the flask, followed by addition of 100*g* of NMP and 50*g* of crotonic acid (product of Tokyo Kasei Co., Ltd.). The mixture was reacted in the same manner as in Example 1 to obtain a consistent polyimide solution composition. The composition was treated similarly, giving 27.5*g* of a polyimide powder. The product had an inherent viscosity of 0.70 in NMP at 30°C.

Comparative Example 2

To 7.35*g* of BPDA, 6.21*g* of BCD, 14.62*g* of APB, 4*g* of pyridine and 15*mℓ* of toluene were added 4.9*g* (50 mmoles) of sulfuric acid and 120*g* of NMP to effect a reaction in the same manner as in Example 3, giving a polyimide solution of low viscosity. A polyimide powder (28.1*g*) separating out and collected from methanol was not higher than 0.1 in inherent viscosity in NMP at 30°C.

Comparative Example 3

The same reaction procedure as in Comparative Example 1 was repeated with the exception of using 100*g* of NMP and 50*g* of ethylene glycol in place of 150*g* of NMP. The polyimide powder obtained was 0.13 in inherent viscosity.

Comparative Example 4

The same reaction procedure as in Comparative Example 1 was repeated with the exception of using 50*g* of NMP and 100*g* of diethylene glycol diethyl ether in place of 150*g* of NMP to obtain a polyimide, which was 0.25 in inherent viscosity in NMP at 30°C.

Comparative Example 5

The same reaction procedure as in Comparative Example 1 was repeated with the exception of using 100*g* of NMP and 50*g* of ethylene glycol monomethyl ether acetate in place of 150*g* of NMP to obtain a polyimide, which was 0.29 in inherent viscosity at 30°C.

Comparative Example 6

The same reaction procedure as in Comparative Example 1 was repeated with the exception of using 120*g* of NMP and 13.0*g* (150 mmoles) of anhydrous oxalic acid in place of 150*g* of NMP to produce a polyimide, which was 0.17 in inherent viscosity in NMP at 30°C.

Comparative Example 7

The same reaction procedure as in Comparative Example 1 was repeated with the exception of using 100*g* of NMP and 50*g* of dimethyl phthalate in place of 150*g* of NMP to produce a polyimide, which was 0.26 in inherent

viscosity in NMP at 30°C.

Comparative Example 8

The same reaction procedure as in Comparative Example 1 was repeated with the exception of using 100*g* of NMP and 50*g* of benzonitrile to produce a polyimide, which was 0.21 in inherent viscosity in NMP at 30°C.

Example 3

The same reaction as in Comparative Example 1 was effected using 100*g* methyl benzoate, 25*g* of dimethyl phthalate, 15*g* of crotonic acid and 30*g* of NMP in place of 150*g* of NMP. A polyimide solution composition of high viscosity was added to methanol to collect a polyimide powder therefrom. The powder was 0.64 in inherent viscosity in NMP at 30°C.

Example 4

A reaction was effected in the same manner as in Example 1 using 16.11*g* of 3, 4, 3', 4'-benzophenonetetracarboxylic dianhydride (50 mmoles, product of Tokyo Kasei Co., Ltd.), 3.05*g* of 4-diaminotoluene (25 mmoles, product of Tokyo Kasei Co., Ltd.), 10.81*g* of bis- [4-(3-aminophenoxy)phenyl] sulfone (25 mmoles, product of Wakayama Seika Co., Ltd.), 4*g* of pyridine, 200*g* of NMP, 25*g* benzoic acid and 50*g* of methyl benzoate to obtain a consistent polyimide solution composition. The composition was poured into 1 liter of methanol to collect a polyimide powder, which was then dried. The powder, which was obtained in an amount of 28.8*g*, had an inherent viscosity of 0.53 in NMP at 30°C. The polyimide was 576°C in thermal decomposition temperature and 263 to 280°C in glass transition temperature as determined by DSC measurement.

Example 5

Block polyimide solution composition and process for preparing same

A stainless steel anchor agitator, nitrogen introduction tube and reflux condenser were attached to a 1-liter three-necked separable flask, the condenser comprising a trap having a stopcock, and a cooling tube having balls and mounted on the trap. While introducing nitrogen into the flask, the flask was heated by being immersed in a silicon bath provided with a temperature adjusting device. The temperature of the bath was the reaction temperature.

Placed in the flask were 64.44*g* (200 mmoles) of 3, 4, 3', 4'-benzophenonetetracarboxylic dianhydride (molecular weight 322.23, product of Chimie Linz Ges. m.b.H., hereinafter referred to as "BTDA"), 12.22*g* (100 mmoles) of 2, 4-diaminotoluene (molecular weight 122.17, product of Tokyo Kasei Co., Ltd.), 2.2*g* (25 mmoles) of crotonic acid (molecular weight 86.09, product of Kanto Kagaku), 2.0*g* (25 mmoles) of pyridine (product of Kanto Kagaku), 300*g* of N-methylpyrrolidone (product of BASF Japan, hereinafter referred to as "NMP") and 100*g* of toluene (product of Kanto Kagaku). While introducing nitrogen into the flask, the materials were stirred at room temperature for 1 hour (200r.p.m.) and then heated at 180°C for 1 hour with stirring, with toluene-water refluxed.

The reactor was cooled in the air, and 43.25g (100 mmoles) of bis[4-(3-aminophenoxy)phenyl] sulfone (molecular weight 43.25, product of Wakayama Seika, hereinafter referred to as "m-BAPS"), 300*g* of NMP and 50*g* of toluene were added to the reaction mixture. The resulting mixture was stirred at room temperature for 1 hour and at 140°C for 1 hour, and heated at 180°C for 3 hours with stirring. One hour after the start of heating at 180°C, toluene-water (14*mℓ*) collecting in the trap with a stopcock was removed, and the toluene refluxed was thereafter drawn off from the system.

The reaction gave a solution composition of a block polyimide composed of the three components, i.e., BTDA, 2, 4-diaminotoluene and m-BAPS.

The polyimide solution was cast onto a stainless steel plate and dried at 150°Cin a dryer having an IR lamp, whereby a polyimide film was formed over the stinless steel plate.

A cross-cut test conducted revealed that the polyimide film exhibited strong adhesion and was not separable from the plate.

When the polyimide solution was poured into a large amount of methanol, followed by stirring in a mixer, a yellow polyimide powder separated out.

A 112*g* quantity of polyimide was obtained by filtering off, washed with methanol, and drying the powder (at 150°C in a vacuum).

The polyimide powder was subjected to thermal analysis and found to be 266 to 284°C in glass transition temperature (Tg) and 552°C in thermal decomposition temperature.

Example 6

A 500-*mℓ* three-necked flask was used for repeating the procedure of Example 5 using 16.11g (50 mmoles) of BTDA, 5.41*g* (25 mmoles) of 4, 4'-diaminodiphenyl sulfide (molecular weight 216.3, product of Wakayama Seika), 0.86*g* (10 mmoles) of crotonic acid, 2.0*g* (25 mmoles) of pyridine, 80g of NMP and 30*g* of toluene. These materials were held at room temperature for 30 minutes and heated at 140°C for 30 minutes and at 180°C for 1 hour with stirring. The reactor was cooled in the air, followed by addition of 10.81g (25 mmoles) of m-BAPS, 50*g* of NMP and 30*g* of toluene. The resulting mixture was maintained at room temperature for 1 hour and heated at 140°C for 30 minutes and then at 180°C for 2 hours with stirring (250r.p.m.). One hour after the start of heating at 180°C, 14*mℓ* of toluene-water was removed, and the toluene refluxed was thereafter drawn off from the system.

The resulting polyimide solution was poured into methanol, and the mixture was stirred in a mixer to obtain a yellow polyimide powder. The powder was filtered off, washed with methanol, and dried, giving 31.3*g* of polyimide. The power was subjected to thermal analysis and consequently found to be 241 to 252°C in Tg and 566°C in thermal decomposition temperature.

Example 7

Substantially the same procedure as in Example 6 was carried out using 16.11*g* (50 mmoles) of BTDA, 8.71g (25 mmoles) of 9, 9-bis(4-aminophenyl)fluorene(molecular weight 348.5, product of Wakayama Seika), 0.86*g* (10 mmoles) of crotonic acid, 2.0*g* (25 mmoles) of pyridine, 80g of NMP and 30*g* of toluene.

The materials were maintained at room temperature for 30 minutes and heated at 140°C for 30 minutes and 180°C for 1 hour with stirring, followed by cooling in the air and then by addition of 10.81g (25 mmoles) of m-BAPS, 50*g* of NMP and 30*g* of toluene. The resulting mixture was maintained at room temperature for 1 hour and heated at 140°C for 30 minutes and at 180°C for 2 hours with stirring, giving a polyimide solution. The solution was cast onto a glass plate and heated in an IR dryer at 85°C to obtain a polyimide film. The polyimide solution was treated in the same manner as in Example 8 to obtain a polyimide powder.

Tg 266-284°C, thermal decomposition temperature 552°C.

Example 8

Substantially the same procedure as in Example 5 was carried out using a 1-liter three-necked flask. Placed into the flask were 32.22*g* (100 mmoles) of BTDA, 21.63*g* (50 mmoles) of m-BAPS, 2.4*g* (20 mmoles) of benzoic acid (molecular weight 122.19, product of Kanto Kagaku), 3.2*g* (40 mmoles) of pyridine, 150*g* of NMP and 40*g* of toluene. While introducing nitrogen into the flask, the materials were maintained at room temperature for 30 minutes and heated at 180°C for 1 hour with stirring. The mixture was cooled in the air, followed by addition of 2.75*g* (25 mmoles) of 2, 6-diaminopyridine (molecular weight 110.14, product of Aldrich), 3.80*g* (25 mmoles) of 3, 5-diaminobenzoic acid (molecular weight 152.15, product of Tokyo Kasei), 150*g* of NMP and 40*g* of toluene. The resulting mixture was maintained at room temperature for 1 hour and heated at 160°C for 30 minutes and then at 180°C for 3 hours with stirring. One hour after the start of heating at 180°C, the toluene refluxed was removed from the system.

A polyimide solution was obtained, which was then cast onto a glass plate and heated at 100°C in an IR dryer, whereby a polyimide film was obtained.

The polyimide solution was poured into an excess of methanol, followed by stirring in a mixer and collection of a powder by filtration. The product was subjected to thermal analysis and consequently found to be 240°C in Tg and 570°C in thermal decomposition temperature.

Example 9

Substantially the same procedure as in Example 8 was carried out using 32.22g (100 mmoles) of BTDA, 21.63*g* (50 mmoles) of m-BAPS, 2.4*g* (20 mmoles) of benzoic acid, 3.2*g* (40 mmoles) of pyridine, 150*g* of NMP and 40*g* of toluene. The materials were maintained at room temperature for 30 minutes and heated at 180°C for 1 hour with stirring. The mixture was cooled in the air, followed by addition of 6.21*g* (25 mmoles) of 3, 3'-diaminodiphenylsulfone (molecular weight 248.3, product of Wakayama Seika, hereinafter referred to as "m-DDS"), 10.82*g* of (25 mmoles) of m-BAPS, 100*g* of NMP and 30*g* of toluene. The resulting mixture was maintained at room temperature for 1 hour and heated at 140°C for 30 minutes and at 180°C for 3 hours with heating. One hour after the start of heating at 180°C, the refluxed substance was removed from the system. The above procedure afforded a polyimide composition, from which a polyimide was collected through precipitation in methanol. Thermal analysis indicated that the product was 222°C in Tg and 581t in decomposition temperature.

Example 10

Substantially the same procedure as in Example 8 was carried out using 32.22*g* (100 mmoles) of BTDA, 21.63*g* (50 mmoles) of m-BAPS, 2.4*g* (20 mmoles) of benzoic acid, 3.2g (40 mmoles) of pyridine, 150*g* of NMP and 40*g* of toluene. The materials were maintained at room temperature for 30 minutes and heated at 180°C for 1 hour with stirring in a nitrogen stream. To the mixture, which was subsequently cooled in air, were added 9.31*g* (25 mmoles) of 3, 3'-dimethyl-4, 4'-diaminobiphenyl-6, 6'-disulfonic acid (molecular weight 372.4, product of Wakayama Seika), 6.113*g* (25 mmoles) of 3, 3'-dimethoxy-4, 4'-diaminobiphenyl (molecular weight 244.3, product of Wakayama Seika), 6*g* (75 mmoles) of pyridine, 150*g* of NMP and 30g of toluene. The resulting mixture was maintained at room temperature for 1 hour and heated at 140°C for 30 minutes and at 180°C for 3 hours with stirring. One hour after the start of heating at 180°C, refluxing toluene was removed from the system.

The polyimide solution obtained was poured into a large amount of methanol, causing a polyimide powder to separate out. The powder was filtered off, washed with methanol, dried and subjected to thermal analysis.

Tg 282°C, thermal decomposition temperature 513°C.

Example 11

Substantially the same procedure as in Example 6 was carried out using a 500-mℓ three necked flask, in which were placed 12.41*g* (50 mmoles) of bicyclo[2, 2, 2]oct-7-ene-2, 3, 5, 6-tetracarboxylic dianhydride (molecular weight 248.19, product of Aldrich Chemical, hereinafter referred to as "BCD"), 3.05*g* (25 mmoles) of 2, 4-diaminotoluene, 2.2*g* (25 mmoles) of crotonic acid, 2.0*g* (25 mmoles) of pyridine, 150*g* of NMP and 30*g* of toluene. While introducing nitrogen into the flask, the materials were maintained at room temperature for 30 minutes and heated at 170°C for 1 hour with stirring. The mixture was then cooled in the air, followed by addition of 8.06*g* (25 mmoles) of BTDA, 14.62*g* (50 mmoles) of 1, 3-bis(3-aminophenoxy)benzene(molecular weight 292.3, product of Mitsui Toatsu), 100*g* of NMP and 30*g* of toluene. The resulting mixture was maintained at room temperature for 1 hour and heated at 140°C for 30 minutes and at 180°C for 2 hours with stirring.

One hour after the start of heating at 180°C, refluxing toluene was removed from the system. A polyimide solution was obtained, which was then cast onto a glass plate and dried at 150°C in an IR dryer to form a polyimide film. Thermal analysis of polyimide powder conducted in the same manner as in Example 8 revealed that the product was 221 to 234°C in Tg and 452°C in thermal decomposition temperature.

Example 12

Substantially the same procedure as in Example 6 was carried out using 29.00*g* (90 mmoles) of BTDA, 3.66*g* (30 mmoles) of 2, 4-diaminotoluene, 2.0*g* (20 mmoles) of $\gamma$-valerolactone (molecular weight 100.12, product of Tokyo Kasei), 2.0*g* (20 mmoles) of N-methylmorpholine, 130*g* of NMP and 30*g* of toluene. These materials were maintained at room temperature for 30 minutes and heated at 180°C for 1 hour with stirring (250r.p.m.). The mixture was then cooled in the air, followed by addition of 12.98*g* (30 mmoles) of m-BAPS, 12.32*g* (30 mmoles) of 2, 2-bis[4-(4-aminophenoxy)phenyl]propane(molecular weight 410.5, product of Wakayama Seika, hereinafter referred to as "BAPP"), 3.0*g* (30 mmoles) of N-methylmorpholine, 100*g* of NMP and 20*g* of toluene. The resulting mixture was maintained at room temperature for 1 hour and heated at 140°C for 30 minutes and at 180°C for 3 hours with stirring . One hour after the start of heating at 180°C, the refluxing substance was removed from the system, giving a polyimide solution of high viscosity.

The solution was cast onto a glass panel and dried at 100°C in an IR dryer to form a polyimide film. When the polyimide solution was cast onto a chromium-plated panel and heated at 200°C in an IR oven, a polyimide coating was formed. When subjected to a cross-cut test (1 mm, 10 × 10), the film remained free of separation.

Example 13

Into a flask were placed 23.52*g* (80 mmoles) of S-BPDA, 16.88*g* (20 mmoles) of diaminosiloxane (amine equivalent 422, product of Shin-Etsu Chemical), 3.44*g* (40 mmoles) of crotonic acid, 6.4*g* (80 mmoles) of pyridine, 200*g* of NMP and 40*g* of toluene. In a nitrogen stream, these materials were maintained at room temperature for 20 minutes and heated at 170°C for 90 minutes with stirring. The mixture was then cooled in the air, followed by addition of 19.84*g* (80 mmoles) of BCD, 40.92*g* (140 mmoles) of m-TPE, 137 *g* of NMP and 40*g* of toluene. The resulting mixture was maintained at room temperature for 30 minutes and heated at 180°Cfor 3.5 hours with stirring. During the period following the heating at 180°Cfor 1 hour, refluxing toluene was removed from the system. A 98*g* quantity of solvent mixture of toluene and dioxane (1:1 in weight ratio) was added to the resulting reaction mixture, consequently giving a polyimide solution having a concentration of 19%. The solution was cast onto a glass panel and heated at 85°C in

an IR dryer to remove the solvent almost completely and form a film. The film was heated in a vacuum at 220°C for 2 hours for drying, giving a polyimide film of improved strength.

The polyimide solution was poured into methanol, followed by vacuum filtration to collect a polyimide powder.

Tg 208°C, thermal decomposition temperature 449°C.

T-peel strength 650 *kg/cm.* The adherends used for determining this bond strength value were a polyimide film (Kapton H, 1 mil in thickness) treated by sputtering, and copper foil (Nikko DHN-02, 35 µm in thickness ).

The polyimide solution was applied to the Kapton film and thereafter dried (85°C × 30 min + 150°C × 60 min) to form an adhesive layer of about 25 µm. The copper foil was affixed to the film and bonded thereto under the condition of 30°C × 60 min× 20 *kg/cm*$^2$. The sample was etched over a width of 1 mm and teated for peel resistance at 90°C. The pulling speed was 50 mm/min.

The polyimide solution was cast on a glass panel and heated at 200°Cin an IR dryer to form a polyimide film. It was found impossible to peel off the polyimide film from the glass panel by a cross-cut test. The solution may be colored as required for use in coating glass, ceramic or metal surfaces.

The polyimide solution is transparent and useful for coating usual window glass and the window glass of ships, vehicles and aircraft to block heat or light and prevent deposition of water droplets.

When the polyimide solution was added to a large amount of methanol, followed by pulverization with a mixer, a polyimide powder was obtained which was 0.18 in inherent viscosity.

Thermal analysis revealed Tg of 246°C and thermal decomposition temperature of 449°C.

Example 14

Block polyimide solution composition containing BCD and diaminosiloxane, and process for preparing same

Substantially the same procedure as in Example 5 was carried out using 8.83g (30 mmoles) of S-BPDA, 9.60*g* (10 mmoles) of diaminosiloxane (amine equivalent 480, product of Shin-Etsu Chemical), 0.86*g* (10 mmoles) of crotonic acid, 3.5*g* (40 mmoles) of pyridine, 100*g* of NMP and 30*g* of toluene. In a nitrogen stream, the materials were maintained at room temperature for 30 minutes and heated at 140°C for 30 minutes and at 170°C for 1 hour with stirring.
The mixture was then cooled in the air, followed by addition of 4.964*g* (20 mmoles) of BCD, 8.01*g* (40 mmoles) of 3, 4'-diaminodiphenyl ether, 100*g* of NMP and 20*g* of toluene. The resulting mixture was maintained at room temperature for 30 minutes and heated at 140°C for 30 minutes and at 170°C for 3 hours with stirring. During the period following the heating at 170°C for 1 hour, refluxing toluene was removed from the system. The above procedure gave a polyimide solution, which was then cast on a glass panel and dried at 200°C in an IR dryer to form a polyimide coating. The coating remained unseparated even when subjected to a cross-cut test.
The solution was poured into methanol to obtain a polyimide powder, which was then thermally analyzed.
Tg (glass transition temperature) was not measurable. Thermal decomposition temperature was 429°C.

Example 15

Into a 1-liter separable flask were placed 11.77*g* (40 mmoles) of S-BPDA, 18.0*g* (20 mmoles) of diaminosilane (amine equivalent 450), 3.41*g* (80 mmoles) of crotonic acid, 6.4*g* (80 mmoles) of pyridine, 240*g* of NMP and 40*g* of toluene. The materials were maintained at room temperature for 30 minutes and heated at 140°C for 30 minutes and at 170°C for 1 hour with stirring (20r.p.m.) while introducing nitrogen into the flask. The mixture was then cooled in the air, followed by addition of 16.016*g* (80 mmoles) of 3, 4'-diaminodiphenyl ether, 39.71*g* (160 mmoles) of BCD, 200*g* of NMP and 40*g* of toluene. The resulting mixture was heated at 140°C for 30 minutes and at 170°C for 1 hour with stirring, and cooled in the air, followed by addition of 43.25*g* (100 mmoles) of m-BAPS, 120*g* of NMP and 40*g* of toluene and further by heating at 140°C for 30 minutes and at 180°C for 3 hours with stirring. During the period following the heating at 180°C for 1 hour, the refluxing substance was removed from the system. The above procedure afforded a polyimide solution, which was then cast on a glass panel and heated to 85°C in an IR dryer. When the coated panel was dipped in water, a transparent polyimide film was obtained. When the polyimide solution as cast on a glass panel was heated at 200°C in the IR dryer, a polyimide coating was formed. When subjected to a cross-cut test, the polyimide film remained unseparable from the glass panel. When required, the solution is colored for use in coating glass, ceramic or metal surfaces. The polyimide solution is transparent and useful for coating usual window glass and the window glass of ships, vehicles and aircraft to block heat or light and prevent deposition of water droplets. When the polyimide solution was added to a large amount of methanol, followed by pulverization in a mixer, a polyimide powder was obtained.

Tg was not determinable by thermal analysis. Thermal decomposition temperature was 429°C.

Example 16

Transparent polyimide solution compositions were prepared by repeating the same reaction procedure as in Example 15 except that 43.25*g* (100 mmoles) of m-BAPS was replaced by 51.85*g* (100 mmoles) of 2, 2-bis [4-(4-aminophenoxy)phenyl] hexafluoropropane (molecular weight 518.4, product of Wakayama Seika) or 41.05*g* (100 mmoles) of BAPP (molecular weight 410.5) or 29.23*g* (100 mmoles) of 1, 3-bis(3-aminophenoxy)benzene(molecular weight 292.3, product of Mitsui Toatsu).
The solutions afforded polyimide powders, which were found to be 240°C, 252°C or 196°C in Tg by thermal analysis.

Example 17

Block polyimide solution for spray coating and process for preparing same
Substantially the same procedure as in Example 5 was carried out using 35.31*g* (120 mmoles) of S-BPDA, 27.48*g* (30 mmoles) of diaminosiloxane (amine equivalent 458, product of Shin-Etsu Chemical), 5.17*g* (60 mmoles) of crotonic acid, 4.75*g* (60 mmoles) of pyridine, 150*g* of NMP and 40*g* of toluene.
The materials were maintained at room temperature for 30 minutes and heated at 160°C for 1 hour with stirring. The mixture was then cooled in the air, followed by addition of 29.78*g* (120 mmoles) of BCD, 62.85*g* (215 mmoles) of m-TPE, 1.48*g* (10.02 mmoles) of phthalic anhydride, 144*g* of NMP and 40*g* of toluene. The resulting mixture was maintained at room temperature for 1 hour and heated at 140°C for 30 minutes and at 180°C for 4.5 hours with stirring. During the period following the heating at 180°C for 1 hour, the refluxing substance was removed from the system.
The above procedure produced a polyimide solution with a concentration of 35%, to which a diluent (toluene: dioxane = 1:1 by weight) was added in an amount of 0.7 times the amount of the solution to reduce the concentration to 20%. The dilution was 200cp. in bubble viscosity. The polyimide solution obtained was checked for molecular weight by gel permeation chromatography using (GPC)-Toso-HLC8020 and tetrahydrofuran as a developing solvent.

| | |
|---|---|
| $\overline{Mn}$ (number average molecular weight) | 7120 |
| $\overline{Mw}$ (weight average moleculr weight) | 17400 |
| $\overline{Mz}$ (Z average molecular weight) | 26400 |
| $\overline{Mv}$ | 17400 |
| $\overline{Mw}/\overline{Mn}$ = 2.45 | |
| $\overline{Mz}/\overline{Mw}$ = 1.51 | |

The polyimide reaction mixture was diluted 1.3-fold with a diluent (dioxane:toluene = 1:1 by weight) to prepare a varnish containing 15% solids.
The varnish was applied by spray coating to SUS 430 stainless steel panels (0.9mm × 75mm × 150mm) and aluminum panels (1.0mm ℓ 50mm × 60mm) which were merely degreased. The coatings (2 *kg/m*$^2$) were treated at 120 to 130°C for 15 minutes in a drying oven and at 270°C for 30 minutes in a baking oven.
The coatings were teated for properties.
With the SUS 430 test pieces, the coatings were 15µm in thickness, had a hardness of 2H (pencil hardness) and proved satisfactory by Erichsen test (pushed out by 8mm), Du pont impact tester (1*kg,* 50*cm*, 1/4-1/8 in.) and cross-cut test (10 × 10 1-mm squares, adhesion test resuling in no separation).
With the aluminum test pieces, the coatings were 10µm in thickness, had a hardness of H to 2H and proved free of separation and satisfactory by the same adhesion test.
The polyimide solution was poured into a large amount of an alcohol, followed by pulverization in a mixer to give a polyimide powder, which was found to be 205°C in Tg and 444°C in thermal decomposition temperature by thermal analysis.
T-peel strength 440 *g/cm* (see Example 18), tensile strength 59 *kg/cm*$^2$ (tested according to ASTM, D882. 10 mm/min, 23°C, dumbbell No. 1, thickness 30µm).

Example 18

Cleaning of reactor

The same reaction procedure as in Example 5 was repeated except that the glass container was replaced by a 1-liter stainless steel reactor. The reaction mixture was cooled in the air and then transferred to another container with a siphon. The reaction mixture was found adhering to the reactor wall and agitator bars. Into the reactor were

placed 450mℓ of toluene, 150mℓ of DMF and 150mℓ of aminoethanol, which were then stirred at 60°C for 60 minutes. The mixture was transferred to another container again, and 300mℓ of DMF was placed into the reactor and stirred at room temperature for 30 minutes. The DMF was transferred to another container, and 300mℓ of methanol was placed into the reactor and stirred. The methanol was transferred to another container, whereby the reactor was completely cleaned.

The reactor was subsequently usable free of any trouble.

## Claims

**1.** A process for preparing a polyimide solution which comprises the steps of :

(i) reacting an acid dianhydride and an aromatic diamine, in a solvent other than a phenolic solvent in the presence of a catalyst, and
(ii) condensing the resulting cation at a temperature in the range of from 100 to 200° C ;

wherein the catalyst consists of a mixture of

(a) crotonic acid, γ-valerolactone or benzoic acid and
(b) pyridine, triethylamine, N-methylmorpholine or quinoline,

wherein the acid dianhydride and the diamine are used in equimolar amounts,
and wherein the solvent is an organic polar solvent selected from the group consisting of a ketone, an aromatic hydrocarbon halide, an aliphatic or aromatic carboxylic acid ester, an ether, N-methyl-2-pyrrolidone, dimethylformamide, N,N-dimethylacetamide, tetramethylurea, dimethylsulfoxide, sulfolane, dioxane, tetrahydrofuran and mixtures thereof.

**2.** A process according to claim 1, which further comprises the step of adding xylene, toluene or tetralin to the reaction system thereby azeotropically removing water from said system.

**3.** A process according to claim 1 for preparing a block polyimide solution, which comprises the steps of :

($i_1$) heating an acid dianhydride and an excess of aromatic diamine in the organic polar solvent in the presence of the catalyst, to form an imide oligomer and
($ii_1$) adding an acid dianhydride to said oligomer and heating the resulting mixture,
or ($i_2$) heating an aromatic diamine and an excess of acid dianhydride in the organic polar solvent in the presence of the catalyst to form an imide oligomer and
($ii_2$) adding an aromatic diamine to said oligomer and heating the resulting mixture,

wherein the heat temperature of steps (i) and (ii) is at least 120°C.

**4.** A process according to claim 3, which further comprises adding toluene, xylene or tetralin to the reaction system, thereby azeotropically removing water from said system.

**5.** A process according to claim 3 or 4, for the preparation of a siloxane-containing block polyimide solution, wherein in step (i) a diaminosiloxane compound is used in place of the aromatic diamine, thereby forming a siloxane imide oligomer having acid anhydride opposite ends.

**6.** A process according to claim 5, for the preparation of a BCD- and siloxane-containing block polyimide solution, wherein bicyclo[2.2.2]oct-7-ene-2,3,5,6-tetracarboxylic dianhydride (BCD) and an aromatic diamine are used in step (ii).

**7.** A coating composition comprising the polyimide solution prepared by the process defined in one of claims 1 to 6.

**8.** A molding material comprising the composition of claim 7 and at least one member selected from finely divided graphite, molybdenum disulfide and ethylene tetrafluoride.

## Patentansprüche

1. Verfahren zur Herstellung einer Polyimid-Lösung, das die Schritte:

    (i) Umsetzen eines Säuredianhydrids und eines aromatischen Diamins in einem anderen als einem phenolischen Lösungsmittel in Gegenwart eines Katalysators, und

    (ii) Kondensieren des resultierenden Kations bei einer Temperatur im Bereich von 100 bis 200°C umfaßt, wobei

    - der Katalysator aus einem Gemisch aus

        (a) Crotonsäure, γ-Valerolacton oder Benzoesäure und
        (b) Pyridin, Triethylamin, N-Methylmorpholin oder Chinolin besteht;

    - das Säuredianhydrid und das Diamin in äquimolaren Mengen verwendet werden;
    - das Lösungsmittel ein organisches polares Lösungsmittel ist, das aus der Gruppe bestehend aus einem Keton, einem aromatischen Kohlenwasserstoffhalogenid, einem aliphatischen oder aromatischen Carbonsäureester, einem Ether, N-Methyl-2-pyrrolidon, Dimethylformamid, N,N-Dimethylacetamid, Tetramethylharnstoff, Dimethylsulfoxid, Sulfolan, Dioxan, Tetrahydrofuran und Gemischen derselben ausgewählt wird.

2. Verfahren nach Anspruch 1, das außerdem den Schritt Zusetzen von Xylol, Toluol oder Tetralin zu dem Reaktionssystem, um dadurch Wasser azeotrop aus dem System zu entfernen, umfaßt.

3. Verfahren nach Anspruch 1 zur Herstellung einer Blockpolyimid-Lösung, das die Schritte

    ($i_1$) Erwärmen eines Säuredianhydrids und eines Überschusses an aromatischen Diamin in dem organischen polaren Lösungsmittel in Gegenwart des Katalysators unter Bildung eines Imidoligomers, und

    ($ii_1$) Zusetzen eines Säuredianhydrids zu dem Oligomer und Erwärmen des resultierenden Gemisches, oder

    ($i_2$) Erwärmen eines aromatischen Diamins und eines Überschusses an Säuredianhydrid in dem organischen polaren Lösungsmittel in Gegenwart des Katalysators unter Bildung eines Imidoligomers und

    ($ii_2$) Zusetzen eines aromatischen Diamins zu dem Oligomer und Erwärmen des resultierenden Gemisches,

    wobei die Erwärmungstemperatur der Schritte (i) und (ii) mindestens 120°C ist, umfaßt.

4. Verfahren nach Anspruch 3, das außerdem Zusetzen von Toluol, Xylol oder Tetralin zu dem Reaktionssystem, um dadurch Wasser azeotrop aus dem Reaktionssystem zu entfernen, umfaßt.

5. Verfahren nach Anspruch 3 oder 4 zur Herstellung einer Lösung eines Siloxan-haltigen Blockpolyimids, wobei in Schritt (i) eine Diaminosiloxan-Verbindung anstelle des aromatischen Diamins verwendet wird und dadurch ein Siloxan-Imid-Oligomer, das gegenüberliegende Säureanhydrid-Enden hat, gebildet wird.

6. Verfahren nach Anspruch 5 zur Herstellung einer Lösung eines BCD- und Siloxan-haltigen Blockpolyimids, wobei in Schritt (ii) Bicyclo[2.2.2]oct-7-en-2,3,5,6-tetracarbonsäuredianhydrid (BCD) und ein aromatisches Diamin verwendet werden.

7. Beschichtungszusammensetzung, die die Polyimid-Lösung, welche nach dem in einem der Ansprüche 1 bis 6 definierten Verfahren hergestellt ist, enthält.

8. Formmasse, die die Zusammensetzung von Anspruch 7 und mindestens ein Glied, das unter fein verteiltes Graphit, Molybdändisulfid und Ethylentetrafluorid ausgewählt ist, enthält.

## Revendications

1. Procédé pour préparer une solution de polyimide qui comprend les étapes de :

   (i) réaction d'un dianhydride d'acide et d'une diamine aromatique dans un solvant autre qu'un solvant phénolique en présence d'un catalyseur et
   (ii) condensation du cation résultant à une température dans le domaine de 100 à 200°C ;

   où le catalyseur consiste en un mélange de

   (a) acide crotonique, γ-valérolactone ou acide benzoïque et
   (b) pyridine, triéthylamine, N-méthylmorpholine ou quinoléine,

   où le dianhydride d'acide et la diamine sont utilisés en des quantités équimolaires,
   et où le solvant est un solvant polaire organique choisi dans le groupe consistant en une cétone, un halogénure d'hydrocarbure aromatique, un ester d'acide carboxylique aliphatique ou aromatique, un éther, la N-méthyl-2-pyrrolidone, le diméthylformamide, le N,N-diméthylacétamide, la tétraméthylurée, le diméthylsulfoxyde, le sulfolane, le dioxane, le tétrahydrofurane et leurs mélanges.

2. Procédé selon la revendication 1, qui comprend en outre l'étape d'addition de xylène, de toluène ou de tétraline au système réactionnel pour retirer par voie azéotropique l'eau dudit système.

3. Procédé selon la revendication 1, pour préparer une solution de polyimide séquence qui comprend les étapes de :

   ($i_1$) chauffage d'un dianhydride d'acide et d'un excès de diamine aromatique dans le solvant polaire organique en présence du catalyseur, pour former un oligomère d'imide et
   ($ii_1$) addition d'un dianhydride d'acide audit oligomère et chauffage du mélange résultant,
   ou ($i_2$) chauffage d'une diamine aromatique et d'un excès de dianhydride d'acide dans le solvant polaire organique en présence du catalyseur pour former un oligomère d'imide et
   ($ii_2$) addition d'une diamine aromatique audit oligomère et chauffage du mélange résultant,

   où la température de chauffage des étapes (i) et (ii) est d'au moins 120°C.

4. Procédé selon la revendication 3, qui comprend en outre l'addition de toluène, xylène ou tétraline au système réactionnel pour retirer l'eau par voie azéotropique dudit système.

5. Procédé selon la revendication 3 ou 4, pour la préparation d'une solution de polyimide séquence contenant un siloxane, où dans l'étape (i) un composé de diaminosiloxane est utilisé à la place de la diamine aromatique pour former un oligomère de siloxane imide ayant des extrémités opposées d'anhydride d'acide.

6. Procédé selon la revendication 5 pour la préparation d'une solution de polymide séquencé contenant BCD et un siloxane où le dianhydride de bicyclo-[2.2.2]oct-7-ène-2,3,5,6-tétracarboxylique (BCD) et une diamine aromatique sont utilisés dans l'étape (ii).

7. Composition de revêtement comprenant la solution de polyimide préparée par le procédé défini dans l'une des revendications 1 à 6.

8. Matière de moulage comprenant la composition de la revendication 7 et au moins un élément choisi parmi le graphite finement divisé, le disulfure de molybdène et le tétrafluorure d'éthylène.

Fig.1

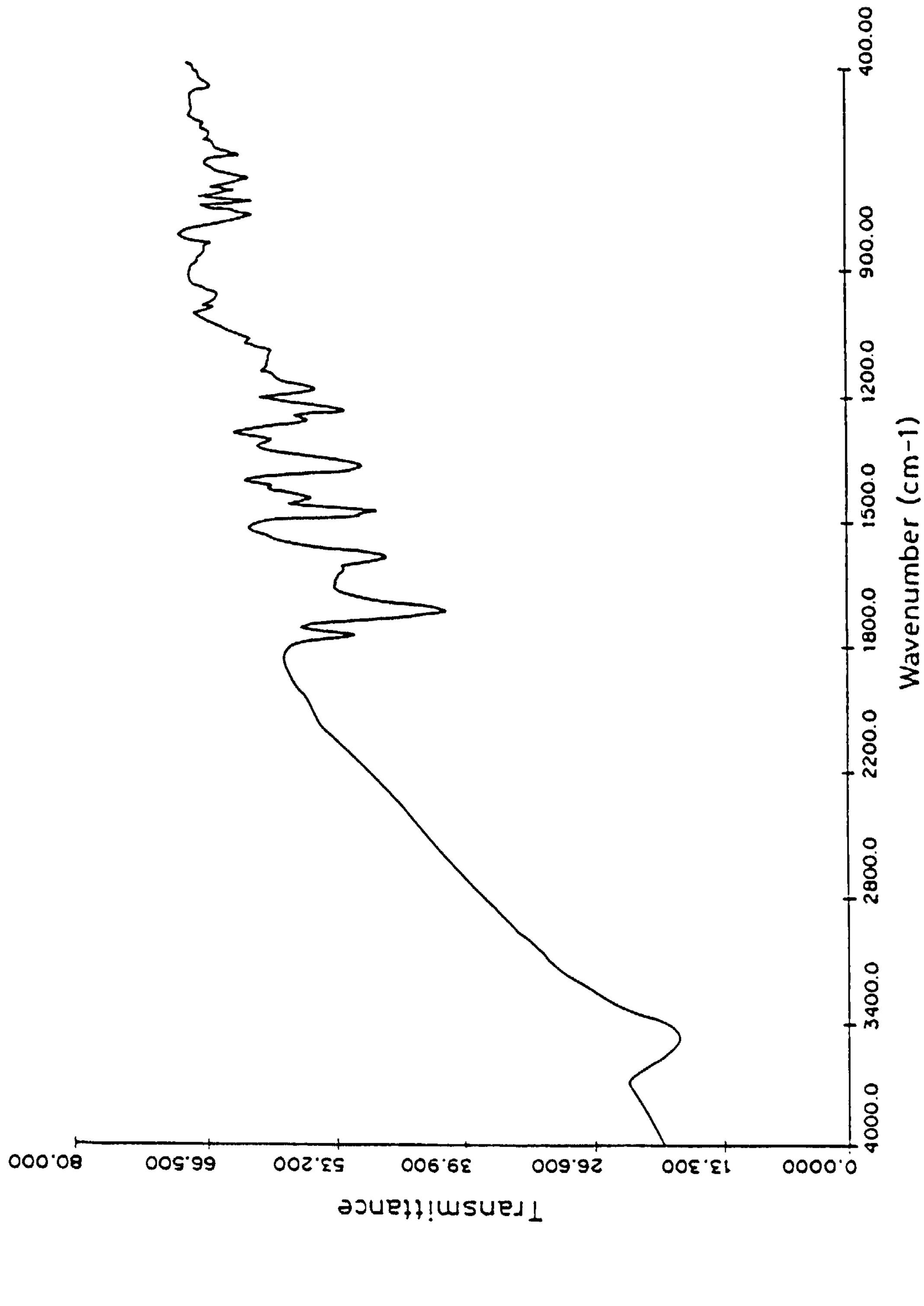
Transmittance
0.0000
13.300
26.600
39.900
53.200
66.500
80.000
Wavenumber (cm-1)
4000.0
3400.0
2800.0
2200.0
1800.0
1500.0
1200.0
900.00
400.00

Fig.2

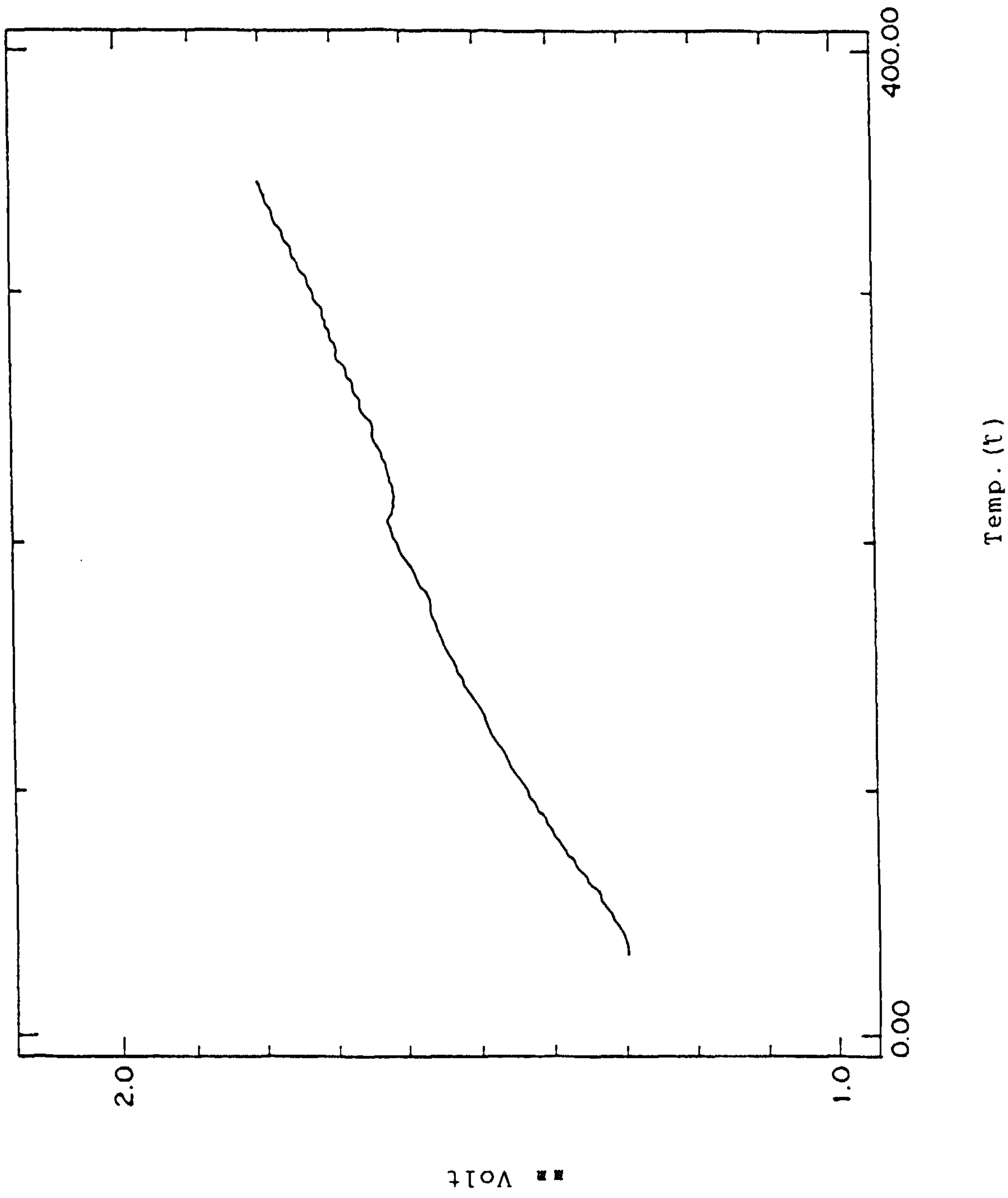

Fig.3